# EUROPÄISCHE PATENTANMELDUNG

(11) **EP 0 536 494 A1**
(43) Veröffentlichungstag der Anmeldung: **14.04.1993**
(21) Anmeldenummer: 92113167.8
(22) Anmeldetag: 01.08.1992
(51) Int. Cl.: F16C 29/02, B23Q 1/26

(54) **Linear-Führung für eine Werkzeugmaschine**

(30) Priorität: 05.10.1991 DE 4133116
(71) Anmelder: Fritz Studer AG, CH-3602 Thun (CH)
(72) Erfinder: Hermann, Abbühl, CH- 3612 Steffisburg (CH)
(74) Vertreter: Wilhelm & Dauster Patentanwälte European Patent Attorneys

(57) **Zusammenfassung**

Bei einer Linear-Führung für eine Werkzeugmaschine mit einem Gleitbelag aus Kunststoff, der eine strukturierte Oberfläche mit Gleitflächenbereichen und Vertiefungen aufweist, wird vorgesehen, daß die Gleitflächenbereiche aus seitlichen, in Längsrichtung verlaufenden, ununterbrochenen Randleisten und dazwischen liegenden Inseln gebildet sind, daß die Randleisten eine Breite von etwa 1,0 mm bis etwa 15 mm besitzen, und daß die Gleitfläche aus Inseln und Randleisten einen Oberflächenanteil von etwa 15 % bis etwa 50 % haben.

## Beschreibung

Die Erfindung betrifft eine Linear-Führung für eine Werkzeugmaschine mit einem Gleitbelag aus Kunststoff, der eine strukturierte Oberfläche mit Gleitflächenbereichen und Vertiefungen aufweist.

Um bei Werkzeugmaschinen ein genaues Positionieren zu ermöglichen, das in der Regel mit kleinen Relativgeschwindigkeiten erfolgt, ist es erforderlich, daß nur ein minimaler Unterschied zwischen Haftreibung und Gleitreibung im Bereich der Linear-Führung besteht. Um dieses Ziel zu erreichen und gleichzeitig einen Verschleiß zu reduzieren, ist es bekannt (CH 676 280 A5), die Linear-Führung mit einem Gleitbelag aus Kunststoff zu versehen, der eine strukturierte Oberfläche aufweist. In die noch pastöse Kunststoffmasse wird ein Abformmodell eingedrückt, das mit einer entsprechenden Negativform versehen ist. Die maßgebende Fläche des Abformmodells ist mit genauer Ebenheit und definierter Rauhtiefe fertig bearbeitet und mit einer Folie beklebt, in welche Aussparungen eingeschnitten sind, die den späteren Vertiefungen des Gleitbelages entsprechen.

Der Erfindung liegt die Aufgabe zugrunde, eine Linear-Führung der eingangs genannten Art so zu verbessern, daß tatsächlich die gewünschten minimalen Unterschiede zwischen Haftreibung und Gleitreibung erhalten werden.

Diese Aufgabe wird dadurch gelöst, daß die Gleitbereiche aus seitlichen, in Längsrichtung verlaufenden, ununterbrochenen Randleisten und dazwischen liegenden Inseln gebildet sind, daß die Randleisten eine Breite von etwa 1,0 mm bis etwa 15 mm besitzen und daß die Inseln und die Randleisten einen Oberflächenanteil vom 15 % bis 50 % haben.

Versuche haben gezeigt, daS trotz des überraschend geringen Oberflächenanteils der Gleitflächenbereiche sehr gute Werte erhalten werden, d.h. tatsächlich nur minimale Unterschiede zwischen der Haftreibung und der Gleitreibung. Damit sind genaue Positionieraufgaben bei geringen Relativgeschwindigkeiten verwirklichbar. Wahrscheinlich liegt dies darin begründet, daß das flüssige Schmiermittel innerhalb der Linear-Führung gut verteilt wird, so daß es die Gleitflächenbereiche sicher benetzt. Die seitlichen Randleisten führen dazu, daß dieses Schmiermittel auch nicht zur Seite hin ausweichen kann.

In weiterer Ausgestaltung der Erfindung wird vorgesehen, daß die Höhe der Randleisten und der Inseln 0,01 mm bis 1,0 mm beträgt. Bei diesen Höhen läßt sich eine gute Schmiermittelverteilung verwirklichen.

In weiterer Ausgestaltung der Erfindung wird vorgesehen, daß die Randleisten und an den Stirnenden des Gleitbelages vorgesehene Querleisten einen geschlossenen Rahmen bilden. Eine derartige Ausbildung ist insbesondere dann sinnvoll, wenn der Gleitbelag an einer "kurzen" Linear-Führung angebracht ist, d.h. an der Linear-Führung eines Schlittens o.dgl. Die Querleisten sorgen dann dafür, daß das flüssige Schmiermittel auch an den Stirnseiten nicht austreten kann. Dadurch ist es möglich, das flüssige Schmiermittel unter erhöhten Druck zu setzen, so daß eine Art hydrostatische Lagerung geschaffen wird.

Weitere Merkmale und Vorteile der Erfindung ergeben sich aus der nachfolgenden Beschreibung der in der Zeichnung dargestellten Ausführungsformen.
- Fig. 1: zeigt einen Längsschnitt durch eine "lange" Linear-Führung, bei welcher der Gleitbelag auf einem stationären Bett o.dgl. angebracht ist, während die Gegenführung eines Schlittens aus Guß oder Stahl besteht,
- Fig. 2: eine perspektivische Ansicht einer ersten Ausführungsform einer Oberflächenstruktur der Linear-Führung,
- Fig. 3: eine perspektivische Ansicht einer V-förmigen Linear-Führung mit der Oberflächenstruktur entsprechend Fig. 2,
- Fig. 4: eine perspektivische Ansicht einer weiteren Ausführungsform einer Linear-Führung,
- Fig. 5: eine perspektivische Ansicht einer V-förmigen Linear-Führung mit einer dem Ausführungsbeispiel nach Fig. 4 entsprechenden Oberflächenstruktur,
- Fig. 6: einen Längsschnitt durch eine Linear-Führung mit einem Gleitbelag an der "kurzen" Führung, d.h. einem Schlitten,
- Fig. 7: eine perspektivische Ansicht einer Linear-Führung eines Schlittens mit einer aus Noppen, Randleisten und Querleisten gebildeten Oberflächenstruktur,
- Fig. 8: eine V-förmige Linear-Führung mit der Oberflächenstruktur nach Fig. 7,
- Fig. 9: eine perspektivische Ansicht einer weiteren Ausführungsform einer Linear-Führung und
- Fig.10: eine perspektivische Ansicht einer V-förmigen Linear-Führung mit einer Oberflächenstruktur nach Fig. 9.

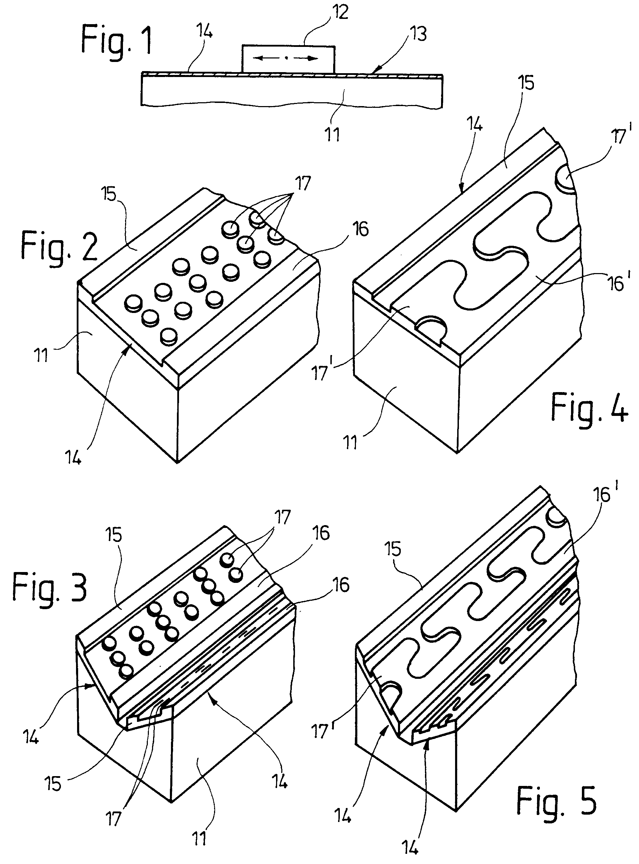

In Fig. 1 ist schematisch ein Maschinenbett (11) und ein darauf verfahrbarer Längsschlitten (12) vorgesehen, zwischen denen eine Linear-Führung (13) vorgesehen ist. Das Maschinenbett (11) besteht aus Grauguß, Stahlguß und insbesondere auch aus Polymerbeton. Seine Gleitfläche der Linear-Führung wird von einem Gleitbelag (14) aus Kunststoff, insbesondere einem aushärtenden Epoxidharz gebildet. Auch anderes Material auf Kunststoffbasis ist geeignet, wenn es ein günstiges Fertigungsverfahren, geringen Verschleiß und niedrige Reibungszahlen ermöglicht. Die plane Gegenfläche des Schlittens (12) besteht aus dem Material des Schlittens, d.h. Grauguß, Stahlguß oder Stahl und ist plan geschliffen.

Der Gleitbelag (14) besitzt eine Oberflächenstruktur, wie sie in Fig. 2 bis 5 näher dargestellt ist. Der Gleitbelag (14) wird als eine Spachtelmasse aufgetragen oder als eine Gießmasse aufgegossen, in die, solange sie sich noch in pastösem Zustand befindet, ein Abformmodell mit der Negativfläche eingedrückt wird, wie dies aus der CH 675 220 A5 bekannt ist. Nach dem Aushärten des Kunststoffes wird das Abformmodell entfernt.

Für die gewünschte Funktion, d.h. die Minimierung des Unterschiedes zwischen Haftreibung und Gleitreibung, ist die Oberflächenstruktur des Belages (14) von entscheidender Bedeutung. Der Belag (14) selbst besitzt eine Gesamtdicke von etwa 1,5 mm bis etwa 2,0 mm. Wesentlich an der erfindungsgemäßen Oberflächenstruktur ist das Vorhandensein von zwei seitlich den Belag (14) begrenzenden Randleisten (15, 16), die eine Breite von etwa 1,0 mm bis etwa 15 mm und vorzugsweise von 2 mm bis 10 mm aufweisen. Diese Randleisten (15, 16) sorgen dafür, daß das zusätzlich vorhandene flüssige Schmiermittel, insbesondere Schmieröl, seitlich nicht austreten kann, so daß eine Art hydrostatische Unterstützung erhalten wird. Zwischen den Randleisten (15, 16) sind einzelne Inseln (17), bei dem Ausführungsbeispiel nach Fig. 2 und 3 in der Form von Noppen, belassen, die den Oberflächenanteil der Gesamtgleitfläche auf 15 % bis 50 % und vorzugsweise auf 25 % bis 40 % der Gesamtgrundfläche erhöhen. Diese noppenförmigen Inseln besitzen einen Durchmesser von etwa 1 mm bis etwa 10 mm. Die Höhe der Randleisten (15, 16) und der Inseln (17) bezüglich der dazwischen liegenden Vertiefungen beträgt etwa 0,01 mm bis etwa 1,0 mm und vorzugsweise 0,05 mm bis 0,5 mm, so daß einerseits eine ausreichende Schmiermittelmenge unterbringbar ist, während andererseits die Inseln in ausreichender Weise in dem Grundmaterial des Gleitbelages (14) verankert sind.

Die V-förmige Linearführung nach Fig. 3 entspricht in ihrem Aufbau der Linear-Führung nach Fig. 2, d.h. es werden die beiden Flanken der V-Führung jeweils mit Gleitbelägen (14) versehen, die jeweils zwei Randleisten (15, 16) und dazwischen liegende noppenförmige Inseln (17) aufweisen. Zwischen den inneren, benachbarten Randleisten (15, 16) der beiden Gleitbeläge (14) ist ein Freiraum belassen.

Die Form der zwischen den Randleisten (15, 16) befindlichen Inseln ist weitgehend frei wählbar. Es sollte jedoch darauf geachtet werden, daß möglichst keine zu großen, ununterbrochenen Flächen entstehen. Insbesondere sollte darauf geachtet werden, daß die Längenerstreckung der Inseln in Längsrichtung der Linear-Führung möglichst 10 mm nicht übersteigt. Ein Ausführungsform für eine abgewandelte Gestalt der Inseln (17') ist in Fig. 4 und 5 dargestellt. Es handelt es sich hierbei um Halbinseln (17'), die von einer Randleiste (16') abragen.

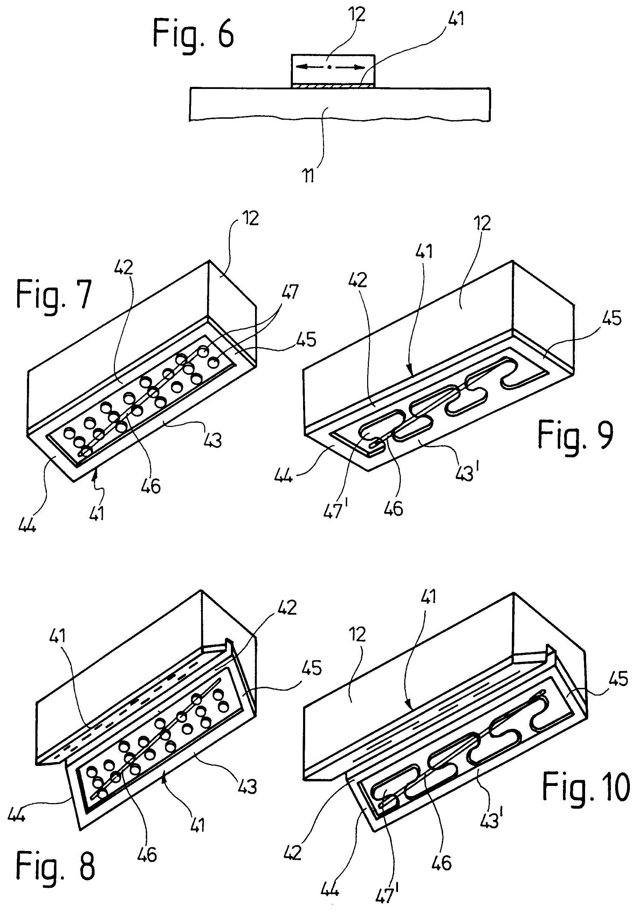

In Fig. 6 ist dargestellt, daß der Gleitbelag (41) aus Kunststoff auch an der "kurzen" Führung einer Linear-Führung vorgesehen werden kann, d.h. an dem Schlitten (12). Die lange Führung des Maschinenbettes (11) o.dgl. besteht dann aus Grauguß, Stahlguß oder Stahl und ist entsprechend durch Schleifen bearbeitet. Im Prinzip wird dann der Gleitbelag (41) entsprechend dem insbesondere zu Fig. 2 und 3 geschilderten Ausführungsbeispiel angebracht und mit einer entsprechenden Oberflächenstruktur versehen, d.h. mit Randleisten (42, 43; 42, 43') und dazwischen liegenden Inseln (47, 47'). Bei einer derartigen "kurzen" Führung wird zusätzlich vorgesehen, daß an den Stirnenden der kurzen Führung Querleisten (44, 45) belassen werden, die zusammen mit den Randleisten (42, 43) einen geschlossenen Rahmen bilden. Dadurch wird der Bereich des Gleitbelages (41) nach außen abgeschlossen, so daß die Schmierflüssigkeit unter Überdruck zugeführt werden kann und damit die hydrostatische Wirkung weiter erhöht. Um die Schmierflüssigkeit, insbesondere Schmieröl, zuführen und verteilen zu können, ist in dem Belag eine Schmiernut (46) vorgesehen, die sich im wesentlichen in diagonaler Richtung erstreckt.

## Patentansprüche

1. Linear-Führung für eine Werkzeugmaschine mit einem Gleitbelag aus Kunststoff, der eine strukturierte Oberfläche mit Gleitflächenbereichen und Vertiefungen aufweist, dadurch gekennzeichnet, daß die Gleitflächenbereiche aus seitlichen, in Längsrichtung verlaufenden, ununterbrochenen Randleisten (15, 16; 15, 16'; 42, 43; 42, 43') und dazwischen liegenden Inseln (17, 17', 47, 47') gebildet sind, daß die Randleisten eine Breite von etwa 1,0 mm bis etwa 15 mm besitzen, und daß die Gleitfläche aus Inseln und Randleisten einen Oberflächenanteil von etwa 15 % bis etwa 50 % haben.

2. Linear-Führung nach Anspruch 1, dadurch gekennzeichnet, daß die Höhe der Randleisten (15, 16; 15, 16'; 42, 43; 42, 43') und der Inseln (17, 17', 47, 47') 0,01 mm bis etwa 1,0 mm beträgt.

3. Linear-Führung nach Anspruch 1 oder 2, dadurch gekennzeichnet, daß die gesamte Dicke des Gleitbelages (14, 41) etwa 1,0 mm bis etwa 3,0 mm beträgt.

4. Linear-Führung nach einem der Ansprüche 1 bis 3, dadurch gekennzeichnet, daß die Randleisten (42, 43; 42, 43') und an den Stirnenden des Gleitbelages (41) vorgesehene Querleisten (44, 45) einen geschlossenen Rahmen bilden.

5. Linear-Führung nach Anspruch 4, dadurch gekennzeichnet, daß innerhalb des Rahmens zur Ölverteilung eine im wesentlichen diagonal verlaufende Schmiernut (46) vorgesehen ist.

6. Linear-Führung nach einem der Ansprüche 1 bis 5, dadurch gekennzeichnet, daß der Gleitbelag (14, 41) aus einer Masse auf der Basis kalthärtender Epoxidharze besteht.
